(19) **Europäisches Patentamt**
European Patent Office
Office européen des brevets

(11) **EP 1 325 307 B1**

(12) **EUROPÄISCHE PATENTSCHRIFT**

(45) Veröffentlichungstag und Bekanntmachung des Hinweises auf die Patenterteilung:
**04.03.2009 Patentblatt 2009/10**

(21) Anmeldenummer: **01969117.9**

(22) Anmeldetag: **01.10.2001**

(51) Int Cl.:
***G01N 21/17*** *(2006.01)*

(86) Internationale Anmeldenummer:
**PCT/CH2001/000588**

(87) Internationale Veröffentlichungsnummer:
**WO 2002/031475 (18.04.2002 Gazette 2002/16)**

(54) **OPTOAKUSTISCHE MESSANORDNUNG UND DEREN VERWENDUNG**

OPTOACOUSTIC MEASURING ARRANGEMENT AND USE THEREOF

ENSEMBLE DE MESURE OPTOACOUSTIQUE ET SON UTILISATION

(84) Benannte Vertragsstaaten:
**AT BE CH CY DE DK ES FI FR GB GR IE IT LI LU MC NL PT SE TR**

(30) Priorität: **09.10.2000 EP 00121937**
**15.05.2001 CH 8962001**

(43) Veröffentlichungstag der Anmeldung:
**09.07.2003 Patentblatt 2003/28**

(73) Patentinhaber: **SIEMENS AKTIENGESELLSCHAFT**
**80333 München (DE)**

(72) Erfinder:
• **FORSTER, Martin**
**CH-8625 Jona (CH)**
• **NEBIKER, Peter**
**CH-8053 Zürich (CH)**

(56) Entgegenhaltungen:
**EP-A- 0 855 592      US-A- 4 594 004**
**US-A- 4 688 942      US-A- 4 817 413**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die vorliegende Erfindung betrifft eine optoakustische Messanordnung für den Nachweis von Gasen und/oder Aerosolen, mit je einer Mess- und Referenzzelle und diesen zugeordneten Mikrofonen, an welche eine Auswerteelektronik angeschlossen ist, in welcher eine Subtraktion der Signale der Mikrofone erfolgt, und mit einer Strahlungsquelle zur modulierten Beaufschlagung der Messzelle, wobei die Modulationsfrequenz der Strahlungsquelle mit der Resonanzfrequenz der Messzelle übereinstimmt.

Die US 4594004 beschreibt eine optoakustische Messvorrichtung zum kontinuierlichen Bestimmen der Konzentration von in einem Gas enthaltenen Partikeln, welche zwei Messzellen aufweist, die parallel zueinander vom Licht eines Lasers durchstrahlt werden. Der ersten Messzelle wird Gas ohne Teilchen zugeführt. Im optischen Weg vor jeder der beiden Messzellen befindet sich ein Chopper. Der erste Chopper wird dabei mit einer Zerhackerfrequenz betrieben, die der Resonanzfrequenz der ersten Messzelle entspricht, während die Zerhackerfrequenz des zweiten Choppers der Resonanzfrequenz der zweiten Messzelle entspricht. Mit einer derartigen Messvorrichtung lässt sich z. B. der Partikelanteil in Abgasen, z. B. von Fahrzeugen, bestimmten.

Die EP 0855592 beschreibt einen Gassensor. Der Gassensor besteht aus einem Sensorkörper, der eine Lichtquelle, eine Messzelle mit einer gaspermeablen Membran und einem Messmikrofon und ein zwischen Lichtquelle und Messzelle angeordnetes optisches Messfilter aufweist. Zusätzlich dazu enthält der Sensorkörper eine von der Messzelle getrennte Referenzzelle mit einem Referenzmikrofon, welches gegenüber optoakustischen Signalen des zu messenden Gases abgeschirmt ist. Das die Konzentration des zu detektierenden Gases anzeigende Messsignal wird durch Subtraktion der Signale der beiden Mikrofone gewonnen.

Beim optoakustischen oder fotoakustischen Effekt wird durch die Bestrahlung eines zu detektierenden Gases durch moduliertes Licht eine akustische Druckwelle verursacht, deren Grösse in direktem Verhältnis zur Konzentration des betreffenden Gases steht. Die akustische Druckwelle entsteht deswegen, weil das Gas die Lichtstrahlung absorbiert und sich dadurch erwärmt. Daraus resultiert eine thermische Ausdehnung und, entsprechend der Modulation der Lichtstrahlung, eine periodische Druckschwankung. Die beiden Zellen werden in der Regel als Mess- und Referenzzelle bezeichnet, und die Messanordnung ist so ausgebildet, dass entweder die Zellen voneinander getrennt sind und die Strahlung beide Zellen durchsetzt (C. F. Dewey, Jr. : Opto-acoustic Spectroscopy and Detection, [Y. H. Pao, ed.], Academic Press, New York, 1977, 47-77) oder die Zellen miteinander verbunden sind und die Strahlung nur die Messzelle durch-setzt (G. Busse and D. Herboeck: Differential Helmholtz resonator as an opto-acoustic detector, Applied Optics, Vol 18, No. 23, 3959).

Beim Nachweis von Aerosolen verhält es sich ähnlich, auch diese absorbieren die modulierte Strahlung, wodurch modulierte Wärme und von dieser modulierter Druck erzeugt wird. Bisher beschriebene optoakustische Sensoren für die Messung von Aerosolen sind meistens Monosensoren mit nur einer Messzelle. Wenn für die Aerosolmessung Sensoren mit zwei Zellen, sogenannte Dualsensoren mit einer Mess- und einer Referenzzelle vorgeschlagen werden, dann sind diese so aufgebaut, dass die Referenzzelle gegen Aerosol abgeschirmt ist. Letzteres wird dadurch erreicht, dass die Luft gefiltert wird, bevor sie in die Referenzzelle gelangt. Ausserdem wird auf die starke Temperaturabhängigkeit der Resonanzfrequenz hingewiesen, welche eine Korrektur der Signalgrösse erfordert.

Bei Anwendung des Dual-Prinzips liegt die Nachweisempfindlichkeit optoakustischer Sensoren für Gase oder Aerosole im Bereich derjenigen von optischen Rauchmeldern. Da die optoakustischen Signale durch Absorption und nicht durch Streuung erzeugt werden, könnten mit dem optoakustischen Prinzip sowohl grosse und auch kleinste Aerosole bis unterhalb des $\mu$-Bereichs detektiert und helle und dunkle Raucharten könnten etwa gleich gut gemessen werden. Trotzdem wird bisher das optoakustische Prinzip zur Rauchdetektion nicht verwendet, was hauptsächlich durch den für die Luftfilterung und die Korrektur der Signalgrösse erforderlichen zusätzlichen Aufwand bedingt ist.

Durch die Erfindung soll nun eine optoakustische Messanordnung der eingangs genannten Art angegeben werden, deren Kosten mit denjenigen eines Streulichtmelders konkurrenzfähig sind.

Diese Aufgabe wird erfindungsgemäss dadurch gelöst, dass die Mess- und die Referenzzelle gegenüber dem nachzuweisenden Gas und/oder Aerosol mindestens einseitig offen sind.

Da bei der erfindungsgemässen optoakustischen Messanordnung beide Zellen gegenüber dem nachzuweisenden Gas und/oder Aerosol offen sind, ist eine Filterung des zu untersuchenden Gases/Aerosols nicht erforderlich. Das Sensorsignal ist im Normalfall gleich Null, und erst bei Anwesenheit von Aerosol oder eines brennbaren Gases, welches die von der Strahlungsquelle ausgesandte Strahlung absorbiert, wird in der Messzelle ein Signal erzeugt, welches zu seiner verarbeitung nur eine relativ einfache Elektronik benötigt. Die Wellenlänge der von der Strahlungsquelle ausgesandten Strahlung ist so gewählt, dass sie von einem nachzuweisenden Gas absorbiert wird. Vorzugsweise ist im Bereich der Strahlungsquelle eine erste Fotozelle zur Überwachung der Intensität der von der Strahlungsquelle ausgesandten Strahlung angeordnet. Neben der Messzelle ist eine zweite Fotozelle angeordnet, welche bei Vorhandensein eines Aerosols von der durch dieses verursachten Streustrahlung der Strahlungsquelle beaufschlagt ist.

Eine erste bevorzugte Ausführungsform der erfindungsgemässen Messanordnung ist dadurch gekennzeichnet, dass die Auswerteelektronik einen Differenzverstärker und einen phasenempfindlichen Gleichrichter enthält.

Eine auf diese Weise ausgebildete Messanordnung kann also sowohl ein Aerosol, also Rauch, als auch ein Gas nachweisen und ist damit hervorragend für die Verwendung als sogenannter Zweikriterienmelder für Rauch und Gas geeignet. Es verhält sich in der Praxis so, dass ein bestimmtes Aerosol in einem bestimmten Wellenlängenbereich absorbiert, wobei die Art des Aerosols vom Brandgut abhängt. Da aber der Rauch eines Feuers praktisch immer auch Mischungen von organischen Substanzen, wie beispielsweise Holz, enthält, welche im gesamten Infrarotbereich stark und im Bereich des sichtbaren Lichts immer noch ausreichend absorbieren, ist die Wahl der Wellenlänge für einen optimalen Aerosolnachweis nicht kritisch.

Wenn nur Rauch nachgewiesen werden soll, ist die zweiteFotozelle nicht erforderlich, weil in diesem Fall eine Wellenlänge gewählt werden kann, bei der keine brennbaren Gase absorbieren. Beim Nachweis von Rauch und Gas ist die seitliche Fotozelle jedenfalls dann erforderlich, wenn ein Gas detektiert werden soll, dessen Absorptionsbereich bei demjenigen von Aerosol liegt.

Eine zweite bevorzugte Ausführungsform der erfindungsgemässen Messanordnung ist dadurch gekennzeichnet, dass die Messzelle mit zwei Strahlungsquellen bestrahlt ist, welche mit unterschiedlichen Frequenzen betrieben sind. Diese Anordnung eignet sich zum Nachweis von Rauch und von zwei Gasen.

Eine weitere bevorzugte Ausführungsform der erfindungsgemässen Messanordnung ist dadurch gekennzeichnet, dass zwei Paare von beidseitig offenen Mess- und Referenzzellen vorgesehen sind, welche jeweils unterschiedliche Länge und somit unterschiedliche Resonanzfrequenzen aufweisen, dass jedem Referenz- und jedem Messzellenpaar je ein Mikrofon zugeordnet, und dass jede Messzelle von einer Strahlungsquelle beaufschlagt ist.

Die Messanordnung mit den zwei Paaren von Mess- und Referenzzellen eignet sich zum Nachweis von Rauch und von zwei Gasen. Durch Hinzufügung eines weiteren Paares mit einer Mess- und einer Referenzzelle kann der Nachweisbereich der Messanordnung auf ein drittes Gas erweitert werden.

Die Erfindung betrifft weiter eine Verwendung der genannten Messanordnung als Rauchmelder. Diese Verwendung ist dadurch gekennzeichnet, dass die Messanordnung eine Messzelle aufweist, welche von einer Strahlung einer Wellenlänge beaufschlagt ist, bei welcher das nachzuweisende Aerosol absorbiert und dadurch ein optoakustischer Effekt erzeugt wird.

Die Erfindung betrifft weiter eine Verwendung der genannten Messanordnung als Brandgefahrenmelder. Diese Verwendung ist dadurch gekennzeichnet, dass die Messanordnung eine Messzelle aufweist, welche von einer Strahlung einer Wellenlänge beaufschlagt ist, bei welcher eine nachzuweisende brennbare oder explosive Substanz absorbiert und dadurch ein optoakustischer Effekt erzeugt wird.

Die Erfindung betrifft weiter eine Verwendung der genannten Messanordnung als kombinierter Rauch- und Gasmelder. Diese Verwendung ist dadurch gekennzeichnet, dass die Messanordnung eine Messzelle aufweist, welche von einer Strahlung einer Wellenlänge beaufschlagt ist, bei welcher eine nachzuweisende brennbare oder explosive Substanz absorbiert und dadurch ein optoakustischer Effekt erzeugt wird, und dass neben der Messzelle eine Fotozelle so angeordnet ist, dass sie von durch ein Aerosol verursachtem Streulicht der Strahlung beaufschlagt wird.

Die Erfindung betrifft weiter eine Verwendung der genannten Messanordnung als kombinierter Brand- und Brandgefahrenmelder. Diese Verwendung ist dadurch gekennzeichnet, dass die Messanordnung zwei Messzellen aufweist, von denen die eine mit Strahlung einer Wellenlänge beaufschlagt ist, bei welcher das nachzuweisende Aerosol und oder ein Brandgas absorbiert, und von denen die andere mit Strahlung einer Wellenlänge beaufschlagt ist, bei welcher eine nachzuweisende brennbare oder explosive Substanz absorbiert und dadurch ein optoakustischer Effekt erzeugt wird.

Im folgenden wird die Erfindung anhand von Ausführungsbeispielen und der Zeichnungen näher erläutert; es zeigt:

Fig. 1    ein vergleichendes Bespiel schematischer Darstellung eines einseitig offenen, resonanten, optoakustischen Dualsensors für Rauch und Gas,

Fig. 2    eine schematische Darstellung eines beidseitig offenen, resonanten, optoakustischen Dualsensors für Rauch und Gas; und

Fig. 3    eine Weiterbildung des Dualsensors von Fig. 2.

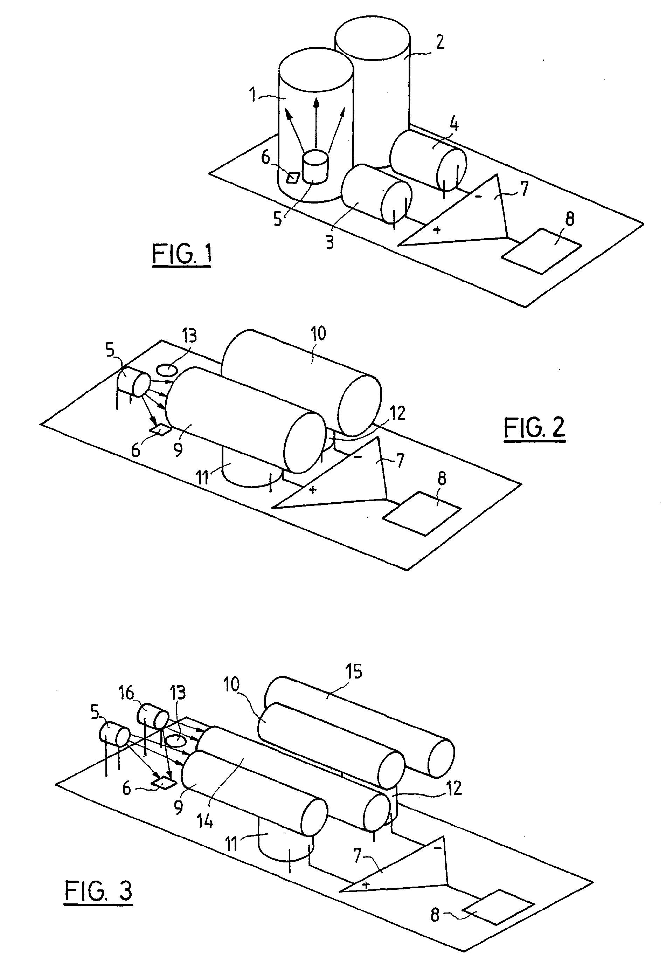

Die in Fig. 1 dargestellte optoakustische Messanordnung ist ein resonanter, einseitig offener Dualsensor mit einer rohrförmigen Messzelle 1 und einer rohrförmigen Referenzzelle 2, denen je ein Mikrofon 3 bzw. 4 zugeordnet ist. Ausserdem ist eine Strahlungsquelle 5, beispielsweise eine LED, vorgesehen, welche den Innenraum der Messzelle 1 mit Strahlung einer bestimmten Wellenlänge beaufschlagt. Neben der Strahlungsquelle 5 ist eine erste Fotozelle 6 zur Überwachung der Intensität der von der Strahlungsquelle 5 ausgesandten Strahlung angeordnet. Die Ausgänge der beiden Mikrofone 3 und 4 sind an einen Differenzverstärker 7 geführt, in welchem die Mikrofonsignale voneinander subtrahiert werden. Das Ausgangssignal des Differenzverstärkers 7 ist an einen phasenempfindlichen Gleichrichter (lock-in) 8 geführt.

Einseitig offene Rohre der Länge I haben eine Resonanzfrequenz $\upsilon_k$, die gegeben ist durch

$$\upsilon k = \frac{2k+1}{4l}c\,, \qquad (k=0,1,2,3,...;\ c = \text{Schallgeschwindigkeit in Luft})$$

Bei einer Länge I von 2 cm ergibt sich eine Resonanzfrequenz $\upsilon_0$ = 4.1 kHz; bei einem beidseitig offenen Rohr ist diese Resonanzfrequenz doppelt so gross. Im Rohr treten also stehende Wellen auf, wobei beim einseitig offenen Rohr am geschlossenen Ende ein Druckbauch (= Bewegungsknoten) und am offenen Ende ein Druckknoten (= Bewegungsbauch) auftritt. Beim beidseitig offenen Rohr befindet sich der Druckbauch in der Mitte des Rohres und je ein Bewegungsbauch an jedem offenen Ende.

Die Strahlungsquelle 5 strahlt moduliert in die Messzelle 1, wobei die Modulationsfrequenz der Strahlungsquelle 5 mit der Resonanzfrequenz der Messzelle übereinstimmt. Wenn die Messzelle 1 ein Aerosol enthält, dann absorbiert dieses die modulierte Strahlung, wodurch modulierte Wärme erzeugt wird. Die modulierte Wärme erzeugt modulierten Druck und dadurch Schall mit der Frequenz der Resonanzfrequenz der Messzelle 1, wodurch die Luftsäule in der Messzelle zu Schwingungen angeregt wird. Gleiches gilt bei Vorhandensein eines Gases in der Messzelle 1. Das Mikrofon 3, welches sich am Ort eines Druckbauches der stehenden Welle befindet, misst die Schwingungen (= Ton) im Rohr. Sobald das Mikrofon 3 einen Ton misst, welcher mit der Resonanzfrequenz der Messzelle 1 übereinstimmt, befindet sich in der Messzelle 1 ein Aerosol und/oder ein Gas.

Im Unterschied zu einem Streulicht-Rauchmelder spricht die dargestellte Messanordnung auf dunkle und helle Aerosole gleich gut an: Dunkle Aerosole ergeben ein grosses Signal, weil schon beim ersten Auftreffen der Strahlung der Strahlungsquelle 5 auf ein Teilchen viel Strahlungsleistung absorbiert wird. Und helle Aerosole ergeben ebenfalls ein grosses Signal, da die Strahlung an den hellen Teilchen mehrfach reflektiert und in Summe ebenfalls stark absorbiert wird. Ausserdem spricht der optoakustische Sensor sowohl auf grosse Aerosole als auch auf sehr kleine unterhalb des $\mu$-Bereichs an, da die optoakustischen Signale durch Absorption und nicht durch Streuung erzeugt werden.

Das Mikrofon 3 misst nicht nur die Resonanzschwingungen in der Messzelle 1, sondern auch alle Geräusche im Raum, was zu Störungen führen kann. Diese Störungen werden durch die Referenzzelle 2 und das Mikrofon 4 eliminiert. Da die Referenzzelle 2 nicht mit der Strahlung einer Strahlungsquelle beaufschlagt ist, kann das Mikrofon 4 auch keine von einer Strahlungsquelle hervorgerufenen Schwingungen messen, sondern misst ausschliesslich die Geräusche des Raumes. Die Signale des Referenzmikrofons 4 werden im Differenzverstärker 8 von den Signalen des Messmikrofons 3 subtrahiert, wodurch die Geräusche des Raumes eliminiert werden. Ebenfalls eliminiert werden Vibrationen, die auf beide Mikrofone gleich einwirken. Die beiden Zellen, Messzelle und Referenzzelle, können auch beidseitig offen sein.

Eine solche Anordnung mit einer beidseitig offenen Messzelle 9, einer beidseitig offenen Referenzzelle 10, einem Messmikrofon 11 und einem Referenzmikrofon 12 ist in Fig. 2 dargestellt. Erfindungsgemäß verfügt diese Anordnung ausserdem über eine zweite Fotozelle 13, welche im Bereich zwischen der Strahlungsquelle 5 und der Messzelle 1 angeordnet ist. Die Lage der zweiten Fotozelle 13 ist so gewählt, dass bei Vorhandensein von Partikeln in dem Bereich zwischen Strahlungsquelle 5 und Messzelle 1 ein Teil des von diesen verursachten Streulichts der Strahlung der Strahlungsquelle 5 auf die Fotozelle 13 fällt. Die zweite Fotozelle 13 ermöglicht eine Unterscheidung zwischen Aerosol und Gas. Wenn sowohl die Messzelle 1 als auch die zweite Fotozelle 13 ein Signal liefern, dann ist ein Aerosol vorhanden. Wenn nur die Messzelle 1 ein Signal liefert, dann ist entweder ein Gas oder ein sehr kleines und damit nicht streuendes Aerosol vorhanden.

Wenn auf die Unterdrückung von Geräuschen im Raum und von Vibrationen verzichtet werden kann, könnte grundsätzlich mit einer Messanordnung ohne Referenzzelle 2 und das dieser zugeordnete Mikrofon 4 das Auslangen gefunden werden. Wenn man bei einer solchen Anordnung die Wellenlänge der Strahlungsquelle 5 beispielsweise auf die $CO_2$-Linie legt, dann wird die Messanordnung sehr empfindlich einerseits die Konzentration des Brandgases $CO_2$ und andererseits die Konzentration von Aerosol messen.

Die in den Fig. 1 und 2 dargestellte Messanordnung kann als Gasmelder, als Rauch (Aerosol)-Melder, als kombinierter Gas- und Rauchmelder ausgelegt und sie kann in diesen verschiedenen Ausbildungen als Brandmelder oder als Brandgefahrenmelder verwendet werden. Ein Brandmelder detektiert Rauch und/oder von Brandgase, oder allgemein, Stoffe, die einen Brand charakterisieren. Ein Brandgefahrenmelder detektiert einerseits einen schon existierenden Brand durch Nachweis eines Aerosols oder von in einem Brand entstehenden Substanzen, er weist andererseits in einem Brand entstehende toxische Substanzen nach, und er erkennt die Gefahr eines möglichen Brandes oder einer möglichen Explosion anhand der Detektion der Anwesenheit brennbarer Stoffe in der Luft.

Stoffe, welche einen Brand charakterisieren, sind insbesondere die folgenden: $CO_2$, CO, NO, $NO_2$, $SO_2$, $NH_3$, HCl, HF, HCN, Amine und Amide, Kohlenwasserstoffe, C, O und H enthaltende Verbindungen; Aerosole. Brennbare Substanzen sind allgemein Kohlenwasserstoffe, speziell $CH_4$, $C_2H_6$, $C_3H_8$, $C_4H_{10}$, $C_2H_2$, $C_2H_4$, sowie allgemein Lösungsmittel, Alkohole, Äther, Ketone, Aldehyde, Amine und Amide, insbesondere Methanol, Äthanol, n-Propanol, Diäthyläther, Ace-ton. Weitere brennbare Substanzen, die ein Brandgefahrenmelder nachweisen sollte, sind C, O und H enthaltende Verbindungen und Carbonsäuren. Toxische Stoffe sind $CO_2$, CO, NO, $NO_2$, $SO_2$, $NH_3$, HCl, HF, HCN, $H_2S$, Nitrile, Phosphorsäureester, Mercaptane, halogenierte Verbindungen.

Da die Schallgeschwindigkeit in der Luft temperaturabhängig ist und sich im Temperaturbereich eines Brandmelders von -20°C bis +70°C um bis zu 30% ändern kann, kann sich auch die Resonanzfrequenz entsprechend ändern. Ebenso beeinflusst auch Wasserdampf die Schallgeschwindigkeit und damit die Resonanzfrequenz. Zur Ausschaltung dieser Einflüsse kann man mit einer Temperaturmessung den ungefähren Bereich der Resonanzfrequenz und die zusätzlich mögliche Ausweitung des Frequenzbereichs durch variierenden Gehalt an Wasserdampf in der Luft berechnen und die Modulationsfrequenz der Strahlungsquelle in diesem Bereich zeitlich verändern (wobbeln).

Eine weitere Störmöglichkeit besteht durch Frequenzen im Raum, welche mit der Resonanzfrequenz übereinstimmen. Solche Frequenzen regen beide Zellen zum Schwingen an, können aber durch die Differenzschaltung nicht vollständig zu Null subtrahiert werden, weil sie wegen des Abstands vom Zentrum der Messzelle 1, 9 zum Zentrum der Referenzzelle 2, 10 mit einer zeitlichen Verschiebung auf die Zellen auftreffen und diese zu leicht phasenverschobenen Schwingungen anregen. Diese Phasenverschiebung kann durch eine möglichst tiefe Resonanzfrequenz minimiert werden, weil dann die störenden Ton-Frequenzen eine grosse akustische Wellenlänge haben und die Phasenverschiebung klein wird. Oder man kann das Signal der Referenzzelle 2, 10 separat messen und beim Auftreffen eines Signals in der Referenzzelle, welches ja nur von aussen erzeugt sein kann, die Alarmschwelle der Messanordnung erhöhen.

Weitere potenzielle Störgrössen sind unterschiedliche Längen der Zellen. Diese Störgrössen kann man dadurch ausschalten, dass man die Resonanzfrequenz einer der beiden Zellen misst und die Länge der anderen Zelle entsprechend mechanisch verändert. Man kann auch die Resonanzfrequenz der Referenzzelle messen und die Strahlungsquelle 5 so platzieren, dass ihre Position die Resonanzfrequenz der Messzelle beeinflusst und mit der Referenzzelle in Übereinstimmung bringt.

Als weitere Kontrolle empfiehlt sich die Überwachung der Mikrofonempfindlichkeit anhand der von der Strahlungsquelle in der Wand der Messzelle 1, 9 erzeugten Nullpunktsignale, die unter allen Umweltbedingungen auftreten.

Die in den Fig. 1 und 2 dargestellte Anordnung zur Messung/Detektion von Rauch und eines Gases kann durch ein zusätzliches Zellenpaar für die Messung/Detektion eines weiteren Gases erweitert werden. Gemäss Fig. 3 ist eine zusätzliche Messzelle 14, eine zusätzliche Referenzzelle 15 und eine zusätzliche Strahlungsquelle 16 vorgesehen, wobei beispielsweise die Messzelle 9 Aerosol und ein erstes Gas misst und die Messzelle 14 ein zweites Gas. Die beiden Messzellen 9 und 14 und entsprechend auch die beiden Referenzzellen 10 und 15 haben unterschiedliche Längen und damit auch verschiedene Resonanzfrequenzen und die beiden Messzellen werden von den Strahlungsquellen 5 bzw. 16 mit Strahlung unterschiedlicher Wellenlängen beaufschlagt. Die beiden unterschiedlichen Resonanzfrequenzen können mit nur einem Messmikrofon 11 gemessen werden. Ebenso ist nur ein Referenzmikrofon 12 und nur eine einzige Fotozelle 6 für die Überwachung der Emission der beiden Strahlungsquellen 5 und 16 erforderlich.

Die Mess- und Referenzzellen können beispielsweise folgende Abmessungen haben:

|  |  |
|---|---|
| Messzelle 9, Referenzzelle 10: | Länge je 2 cm, Resonanzfrequenz je 8.2 kHz |
| Messzelle 14, Referenzzelle 15: | Länge je 2.2 cm, Resonanzfrequenz je 7.6 kHz. |

Die Modulationsfrequenz der Strahlungsquelle 5 beträgt entsprechend 8.2 kHz und diejenige der Strahlungsquelle 16 beträgt 7.6 kHz. Als Strahlungsquellen werden LEDs verwendet.

Der Zusatzaufwand für die Detektion eines zweiten Gases beträgt also nur die Kosten für das zweite Zellenpaar und für die zweite Strahlungsquelle. Es ist leicht einzusehen, dass ein Ausbau für die Detektion eines dritten Gases nur ein weiteres Zellenpaar und eine weitere Strahlungsquelle erfordert.

An Stelle von zwei verschieden langen Paaren von Mess- und Referenzzellen (9, 10; 14, 15), welche mit zwei Strahlungsquellen 5 und 16 gleichzeitig bestrahlt werden, kann man bei der Anordnung von Fig. 2 die Messzelle 9 des einen Zellenpaares mit zwei Strahlungsquellen 5 und 16 gleichzeitig bestrahlen und diese mit verschiedenen Frequenzen betreiben. Beispielsweise die Strahlungsquelle 5 mit der Grundfrequenz und die Strahlungsquelle 16 mit dem ersten Oberton. Man benötigt dadurch verglichen mit der Anordnung von Fig. 3 nur die halbe Anzahl an Zellen und Mikrofonen und spart entsprechend Kosten.

Neben den resonanten ein- oder beidseitig offenen optoakustischen Dualsensoren sind auch nichtresonante, geschlossene Dualsensoren bekannt (siehe beispielsweise EP-A-0 855 592), welche ebenfalls so ausgebildet werden können, dass mit ihnen der Nachweis von Aerosolen und Gasen möglich wird. Wie der EP-A-0 855 592 zu entnehmen ist, enthalten diese optoakustischen Dualsensoren eine Mess- und eine Referenzzelle, die durch je eine Membran gegenüber der Umwelt abgeschlossen sind, und eine Strahlungsquelle. Durch die Membran kann Gas in die Zellen eindringen. Es ist ein Mess- und ein Referenzmikrofon vorgesehen, wobei das Referenzmikrofon gegenüber optoakustischen Signalen des nachzuweisenden Gases/Aerosols abgeschirmt ist. Damit auch Aerosolteilchen in die Zellen eindringen können, ist die Porenweite der Membranen entsprechend vergrössert.

Dadurch werden aber die Membranen für Frequenzen unterhalb von 500 Hz akustisch weich, es ist kein Druckaufbau in der Zelle mehr möglich und die Empfindlichkeit sinkt stark. Durch Erhöhung der Modulationsfrequenz auf einige Kilohertz werden die Membranen wieder akustisch hart und die Empfindlichkeit sinkt nicht mehr ab. Eine eventuelle Verstopfung der Membranen kann man dadurch überwachen, dass man das Referenzsignal separat misst, was einen Grundpegel an Rauschen ergibt, und die Empfindlichkeit anhand dieses Grundpegels nachführt. Wenn man die Wellenlänge der Strahlungsquelle beispielsweise auf die $CO_2$-Linie legt, dann wird die Messanordnung sehr empfindlich die Konzentration des Brandgases $CO_2$ messen. Andererseits wird aber auch die Konzentration von Aerosol sehr empfindlich gemessen, weil Cellulose und angekohlte Celluloseteilchen im gesamten Infrarot intensiv absorbieren. Das Volumen pro Zelle beträgt etwa 2 mal 2 mal 2 cm³.

**Patentansprüche**

1. Optoakustische Messanordung für den Nachweis von Gasen und/oder Aerosolen, mit je einer Mess- und Referenzzelle (9, 14 bzw. 10, 15) und diesen zugeordneten Mikrofonen (11 bzw. 12), an welche eine Auswerteelektronik (7, 8) angeschlossen ist, in welcher eine Subtraktion der Signale der Mikrofone (11 bzw. 12) erfolgt, und mit einer Strahlungsquelle (5, 16) für Licht zur modulierten Beaufschlagung der Messzelle (9, 14), wobei die Modulationsfrequenz der Strahlungsquelle (5, 16) mit der Resonanzfrequenz bezüglich Schall der Messzelle (9, 14) übereinstimmt, wobei die Mess- und die Referenzzelle (9, 14 bzw. 10, 15) gegenüber dem nachzuweisenden Gas und/oder Aerosol mindestens einseitig offen sind und wobei die Wellenlänge der von der Strahlungsquelle (5, 16) ausgesandten Strahlung so gewählt ist, dass sie von einem nachzuweisenden Gas absorbiert wird, **dadurch gekennzeichnet, dass** im Bereich zwischen der Strahlungsquelle (5, 16) und Messzelle (9, 14) eine zweite Fotozelle (13) angeordnet ist, welche bei Vorhandensein eines Aerosols von der durch dieses verursachten Streustrahlung der Strahlungsquelle (5, 16) beaufschlagt ist.

2. Messanordung nach Anspruch 1, **dadurch gekennzeichnet, dass** die Auswerteelektronik einen Differenzverstärker (7) und einen phasenempfindlichen Gleichrichter (8) enthält.

3. Messanordung nach Anspruch 3, **dadurch gekennzeichnet, dass** im Bereich der Strahlungsquelle (5, 16) eine erste Fotozelle (6) zur Überwachung der Intensität der von der Strahlungsquelle (5, 16) ausgesandten Strahlung angeordnet ist.

4. Messanordung nach einem der Ansprüche 1 bis 5, **dadurch gekennzeichnet, dass** die Messzelle (9) mit zwei Strahlungsquellen (5, 16) bestrahlt ist, welche mit unterschiedlichen Frequenzen betrieben sind.

5. Messanordung nach Anspruch 6, **dadurch gekennzeichnet, dass** die eine Strahlungsquelle (5) mit der Grundfrequenz und die andere mit dem ersten Oberton betrieben ist.

6. Messanordung nach Anspruch 4 oder 5, **dadurch gekennzeichnet, dass** zwei Paare von beidseitig offenen Mess- und Referenzzellen (9, 14; 10, 15) vorgesehen sind, welche jeweils unterschiedliche Länge und somit unterschiedliche Resonanzfrequenzen aufweisen, dass jedem Referenz- und jedem Messzellenpaar (9, 14 bzw. 10, 15) je ein Mikrofon (11 bzw. 12) zugeordnet, und dass jede Messzelle (9, 14) von einer Strahlungsquelle (5 bzw. 16) beaufschlagt ist.

7. Messanordung nach einem der Ansprüche 1 bis 8, **dadurch gekennzeichnet, dass** ein Sensor zur Messung der Umgebungstemperatur vorgesehen ist, und dass eine Einstellung der Modulationsfrequenz der Strahlungsquelle (5, 16) auf einen der gemessenen Umgebungstemperatur entsprechenden Frequenzbereich und eine zeitliche Veränderung der Modulationsfrequenz innerhalb dieses Frequenzbereichs erfolgt.

8. Verwendung der Messanordung nach einem der Ansprüche 1 bis 9 als Rauchmelder, **dadurch gekennzeichnet, dass** die Messzelle (9, 14) von einer Strahlung einer Wellenlänge beaufschlagt ist, bei welcher das nachzuweisende Aerosol absorbiert und **dadurch** ein optoakustischer Effekt erzeugt wird.

9. Verwendung der Messanordung nach einem der Ansprüche 1 bis 9 als Brandgefahrenmelder, **dadurch gekennzeichnet, dass** die Messzelle (9, 14) von einer Strahlung einer Wellenlänge beaufschlagt ist, bei welcher eine nachzuweisende brennbare oder explosive Substanz absorbiert und **dadurch** ein optoakustischer Effekt erzeugt wird.

10. Verwendung nach Anspruch 11, **dadurch gekennzeichnet, dass** die nachzuweisende brennbare oder explosive Substanz durch eine oder mehrere der folgenden Stoffe gebildet ist: Kohlenwasserstoffe, speziell $CH_4$, $C_2H_6$, $C_3H_8$, $C_4H_{10}$, $C_2H_2$, $C_2H_4$, sowie allgemein Lösungsmittel, Alkohole, Äther, Ketone, Aldehyde, Amine und Amide, insbesondere Methanol, Äthanol, n-Propanol, Diäthyläther, Ace-ton, C, O und H enthaltende Verbindungen, Carbonsäuren.

11. Verwendung nach Anspruch 11, **dadurch gekennzeichnet, dass** die Messanordnung eine Messzelle (9, 14) aufweist, welche von einer Strahlung einer Wellenlänge beaufschlagt ist, bei welcher eine nachzuweisende toxische Substanz absorbiert und **dadurch** ein optoakustischer Effekt erzeugt wird.

12. Verwendung nach Anspruch 13, **dadurch gekennzeichnet, dass** die nachzuweisende toxische Substanz durch einen oder mehrere der folgenden Stoffe gebildet ist: $CO_2$, CO, NO, $NO_2$, $SO_2$, $NH_3$, HCl, HF, HCN, $H_2S$, Nitrile, Phosphorsäureester, Mercaptane, halogenierte Verbindungen.

13. Verwendung der Messanordnung nach einem der Ansprüche 1 bis 7 als kombinierter Rauch- und Gasmelder, **dadurch gekennzeichnet, dass** die Messzelle (9, 14) von einer Strahlung einer Wellenlänge beaufschlagt ist, bei welcher eine nachzuweisende brennbare oder explosive Substanz absorbiert und **dadurch** ein optoakustischer Effekt erzeugt wird, und dass neben der Messzelle (9, 14) die zweite Fotozelle (13) so angeordnet ist, dass sie von durch ein Aerosol verursachtem Streulicht der Strahlung beaufschlagt wird.

## Claims

1. Opto-acoustic measuring arrangement for the detection of gases and/or aerosols, having a measuring cell and a reference cell (9, 14 and 10, 15), respectively, and microphones (11 and 12) assigned to these cells, to which microphones an electronic evaluation circuit (7, 8) is connected, in which a subtraction of the signals of the microphones (11 and 12) takes place, and having a radiation source (5, 16) for applying a modulated signal to the measuring cell (9, 14), wherein the modulation frequency of the radiation source (5, 16) coincides with the resonant frequency with regard to sound of the measuring cell (9, 14), wherein the measuring cell and the reference cell (9, 14 and 10, 15) are open at at least one side to the gas and/or aerosol to be detected and wherein the wavelength of the radiation emitted by the radiation source (5, 16) is chosen so that it is absorbed by a gas to be detected, **characterised in that** a second photocell (13) is disposed in the region between the radiation source (5, 16) and the measuring cell (9, 14), which second photocell, in the presence of an aerosol, is exposed to the scattered radiation of the radiation source (5, 16) caused by this aerosol.

2. Measuring arrangement according to Claim 1, **characterised in that** the electronic evaluation circuit contains a differential amplifier (7) and a phase-sensitive rectifier (8).

3. Measuring arrangement according to Claim 1, **characterised in that** a first photocell (6) for monitoring the intensity of the radiation emitted by the radiation source (5, 16) is disposed in the region of the radiation source (5, 16).

4. Measuring arrangement according to one of Claims 1 to 3, **characterised in that** the measuring cell (9) is exposed to two radiation sources (5, 16), which are operated at different frequencies.

5. Measuring arrangement according to Claim 4, **characterised in that** one of the radiation sources (5) is operated at the fundamental frequency and the other is operated at the first harmonic.

6. Measuring arrangement according to Claim 1 or 3, **characterised in that** two pairs of measuring cells and reference cells (9, 14; 10, 15), open at both ends, are provided, each of which has a different length and thus different resonant frequencies, that a microphone (11 and 12) is assigned to each reference cell and to each measuring cell pair (9, 14 and 10, 15), and that each measuring cell (9, 14) is exposed to a radiation source (5 and 16).

7. Measuring arrangement according to one of Claims 1 to 6, **characterised in that** a sensor for measuring the ambient temperature is provided, and that an adjustment of the modulation frequency of the radiation source (5, 16) to a frequency range corresponding to the measured ambient temperature, and a time-shift of the modulation frequency within this frequency range, takes place.

8. Application of the measuring arrangement according to one of Claims 1 to 7 as a smoke alarm, **characterised in that** the measuring cell (9, 14) is exposed to a radiation of a wavelength at which the aerosol to be detected is absorbent, and an opto-acoustic effect is produced as a result.

9. Application of the measuring arrangement according to one of Claims 1 to 7 as a fire hazard alarm, **characterised in that** the measuring cell (9, 14) is exposed to a radiation of a wavelength at which a combustible or explosive substance to be detected is absorbent and an opto-acoustic effect is produced as a result.

10. Application according to Claim 9, **characterised in that** the combustible or explosive substance to be detected is formed by one or more of the following substance: hydrocarbons, particularly $CH_4$, $C_2H_6$, $C_3H_8$, $C_4H_{10}$, $C_2H_2$, $C_2H_4$, as well as general solvents, alcohols, ethers, ketones, aldehydes, amines and amides, in particular methanol, ethanol, n-propanol, diethylether, acetone, compounds containing C, O and H, and carboxylic acids.

11. Application according to Claim 9, **characterised in that** the measuring arrangement has a measuring cell (9, 14), which is exposed to a radiation of a wavelength at which a toxic substance to be detected is absorbent and an opto-acoustic effect is produced as a result.

12. Application according to Claim 11, **characterised in that** the toxic substance to be detected is formed by one or more of the following substances: $CO_2$, CO, NO, $NO_2$, $SO_2$, $NH_3$, HCI, HF, HCN, $H_2S$, nitriles, phosphoric esters, mercaptans, halogenated compounds.

13. Application of the measuring arrangement according to one of Claims 1 to 7, as a combined smoke and gas alarm, **characterised in that** the measuring cell (9, 14) is exposed to a radiation of a wavelength at which a combustible or explosive substance to be detected is absorbent and an opto-acoustic effect is produced as a result, and that in addition to the measuring cell (9, 14), the second photocell (13) is disposed so that it is exposed to scattered light of the radiation, caused by an aerosol.

**Revendications**

1. Ensemble de mesure opto-acoustique pour la détection de gaz et/ou d'aérosols, comprenant à chaque fois une cellule de mesure et une cellule de référence (9, 14 resp. 10, 15) et des microphones (11 resp. 12) associés à celles-ci et auxquels est connectée une électronique d'analyse (7, 8) dans laquelle est produite une soustraction des signaux des microphones (11 resp. 12), et comprenant une source de rayonnement (5, 16) pour de la lumière en vue de l'exposition modulée de la cellule de mesure (9, 14), la fréquence de modulation de la source de rayonnement (5, 16) étant syntonisée avec la fréquence de résonance, acoustique, de la cellule de mesure (9, 14), la cellule de mesure et la cellule de référence (9, 14 resp. 10, 15) étant ouvertes au moins sur un côté face au gaz et/ou à l'aérosol à détecter et la longueur d'onde du rayonnement émis par la source de rayonnement (5, 16) étant choisie de manière à être absorbée par un gaz à détecter, **caractérisé en ce qu'**une seconde cellule photo-électrique (13) qui, en présence d'un aérosol, est exposée au rayonnement diffus de la source de rayonnement (5, 16) provoqué par celui-ci, est située dans la zone entre la source de rayonnement (5, 16) et la cellule de mesure (9, 14).

2. Ensemble de mesure selon la revendication 1, **caractérisé en ce que** l'électronique d'analyse comprend un amplificateur différentiel (7) et un redresseur sensible à la phase (8).

3. Ensemble de mesure selon la revendication 1, **caractérisé en ce qu'**une première cellule photo-électrique (6) servant à surveiller l'intensité du rayonnement émis par la source de rayonnement (5, 16) est située dans la zone de la source de rayonnement (5, 16).

4. Ensemble de mesure selon l'une des revendications 1 à 3, **caractérisé en ce que** la cellule de mesure (9) est exposée aux rayons de deux sources de rayonnement (5, 16) qui fonctionnent avec des fréquences différentes.

5. Ensemble de mesure selon la revendication 4, **caractérisé en ce qu'**une des sources de rayonnement (5) fonctionne avec la fréquence fondamentale et l'autre avec le premier son harmonique.

6. Ensemble de mesure selon la revendication 1 ou 3, **caractérisé en ce que** deux paires de cellules de mesure et de référence sont prévues (9, 14; 10, 15) ouvertes sur les deux côtés qui ont chacune une longueur différente et donc des fréquences de résonance différentes, **en ce qu'**un microphone (11 resp. 12) est associé à chaque fois à chaque paire de cellules de référence et de cellules de mesure (9, 14 resp. 10, 15) et **en ce que** chaque cellule de mesure (9, 14) est exposée à une source de rayonnement (5 resp. 16).

**7.** Ensemble de mesure selon l'une des revendications 1 à 6, **caractérisé en ce qu'**un capteur de mesure de la température ambiante est prévu et **en ce qu'**un réglage de la fréquence de modulation de la source de rayonnement (5, 16) sur une plage de fréquences correspondant à la température ambiante mesurée et une modification temporelle de la fréquence de modulation à l'intérieur de cette plage de fréquences sont effectués.

**8.** Utilisation de l'ensemble de mesure selon l'une des revendications 1 à 7 en tant que détecteur de fumée, **caractérisée en ce que** la cellule de mesure (9, 14) est exposée à un rayonnement d'une longueur d'onde à laquelle l'aérosol à détecter absorbe, ce qui produit un effet opto-acoustique.

**9.** Utilisation de l'ensemble de mesure selon l'une des revendications 1 à 7 en tant que détecteur de risque d'incendie, **caractérisée en ce que** la cellule de mesure (9, 14) est exposée à un rayonnement d'une longueur d'onde à laquelle une substance combustible ou explosive à détecter absorbe, ce qui produit un effet opto-acoustique.

**10.** Utilisation selon la revendication 9, **caractérisée en ce que** la substance combustible ou explosive à détecter est formée d'un ou plusieurs des produits suivants : hydrocarbures, notamment $CH_4$, $C_2H_6$, $C_3H_8$, $C_4H_{10}$, $C_2H_2$, $C_2H_4$ et, de manière générale, des solvants, alcools, éthers, cétones, aldéhydes, amines et amides, notamment méthanol, éthanol, n-propanol, diéthyléther, acétone, composés contenant C, O et H, acides carboxyliques.

**11.** Utilisation selon la revendication 9, **caractérisée en ce que** l'ensemble de mesure comprend une cellule de mesure (9, 14) qui est exposée à un rayonnement d'une longueur d'onde à laquelle une substance toxique à détecter absorbe, ce qui produit un effet opto-acoustique.

**12.** Utilisation selon la revendication 11, **caractérisée en ce que** la substance toxique à détecter est formée d'un ou plusieurs des produits suivants : $CO_2$, CO, NO, $NO_2$, $SO_2$, $NH_3$, HCl, HF, HCN, $H_2S$, nitrile, ester phosphorique, mercaptane, composés halogénés.

**13.** Utilisation de l'ensemble de mesure selon l'une des revendications 1 à 7 en tant que détecteur combiné de fumée et de gaz, **caractérisée en ce que** la cellule de mesure (9, 14) est exposée à un rayonnement d'une longueur d'onde à laquelle une substance combustible ou explosive à détecter absorbe, ce qui produit un effet opto-acoustique, et **en ce que** la seconde cellule photo-électrique (13) est située près de la cellule de mesure (9, 14) de manière à être exposée à la lumière diffuse du rayonnement provoquée par un aérosol.

FIG. 1

FIG. 2

FIG. 3

## IN DER BESCHREIBUNG AUFGEFÜHRTE DOKUMENTE

**In der Beschreibung aufgeführte Patentdokumente**

- US 4594004 A
- EP 0855592 A

**In der Beschreibung aufgeführte Nicht-Patentliteratur**

- **C. F. DEWEY, JR.** Opto-acoustic Spectroscopy and Detection. Academic Press, 1977, 47-77
- **G. BUSSE ; D. HERBOECK.** Differential Helmholtz resonator as an opto-acoustic detector. *Applied Optics,* vol. 18 (23), 3959